# EUROPÄISCHE PATENTANMELDUNG

(11) **EP 2 747 071 A1**
(43) Veröffentlichungstag der Anmeldung: **25.06.2014**
(21) Anmeldenummer: 12199132.7
(22) Anmeldetag: 21.12.2012
(51) Int. Cl.: G09G 5/36, G06F 21/57, G09G 5/14, G06F 3/14, G09G 5/397, G06F 21/52

(54) **Anzeige eines fälschungssicheren Identitätsindikators**

(71) Anmelder: Deutsche Telekom AG, 53113 Bonn (DE); Technische Universität Berlin, 10623 Berlin (DE)
(72) Erfinder: Danisevskis, Janis, 10961 Berlin (DE)
(74) Vertreter: Vossius & Partner

(57) **Zusammenfassung**

Die vorliegende Erfindung betrifft ein Verfahren zur Anzeige eines fälschungssicheren Identitätsindikators (31) auf einem Bildschirm (30) mit Hilfe eines Displaycontrollers (20) einer Grafikschaltung, wobei der Displaycontroller den Inhalt eines Speichers (100) der Grafikschaltung auf dem Bildschirm (30) darstellt. Zunächst wird eine auf dem Bildschirm (30) darzustellende Grafik (32) durch eine Klientanwendung (11, 12, ...,1N) in einen Klient spezifischen Bereich (22) des Speichers (100) der Grafikschaltung geschrieben. Danach wird ein zur Klientanwendung (11, 12, ...,1N) gehörender Identitätsindikator (31) in einen Speicherbereich (21) außerhalb des Klient spezifischen Bereichs (22) geschrieben. Anschließend wird der Klient spezifische Bereich (22) des Speichers der Grafikschaltung unter Verwendung des Displaycontrollers (20) auf dem Bildschirm (32, 30) angezeigt. Gleichzeitig wird der zugehörige Identitätsindikator (31) aus dem Speicherbereich (21) außerhalb des Klient spezifischen Bereichs (22) auf dem Bildschirm (31, 30) angezeigt, unter Verwendung einer Overlayfunktionalität des Displaycontrollers (20).

## Beschreibung

Die Erfindung betrifft ein Verfahren zur Anzeige eines fälschungssicheren Identitätsindikators. Insbesondere betrifft die Erfindung die Verwendung eines durch Hardware implementierten Framebufferoverlays zur Anzeige eines fälschungssicheren Identitätsindikators. Beispielsweise kann durch die erfindungsgemäße Verwendung einer Overlayfunktionalität von Displaycontrollern eine Anzeige eines fälschungssicheren Indikators für die Identität von Anwendungen bereitgestellt werden.

### HINTERGRUND DER ERFINDUNG

Wenn eine Anzeige zwischen mehreren Anwendungen geteilt wird ist es möglich, dass sich eine Anwendung für eine andere Anwendung ausgibt, um so den Benutzer dazu zu bringen, vertrauliche Informationen, wie zum Beispiel eine Persönliche Identifikations-Nummer (PIN) oder Geheimzahl preiszugeben. Diese Vorgehensweise eines Angreifers ist als *Phishing* bekannt. Ein fälschungssicherer bzw. nicht fälschbarer Identitätsindikator kann dieses Problem abschwächen bzw. beheben, indem dem Benutzer jederzeit angezeigt wird, welche Anwendung er tatsächlich am Bildschirm sieht. Der Benutzer kann dann entscheiden, ob diese Anwendung vertrauenswürdig ist oder nicht.

Zunächst sollen einige Begriffe definiert werden, wie sie im Sinne der vorliegenden Erfindung zu verstehen sind.

Als Displaycontroller wird üblicherweise eine Vorrichtung bzw. ein Teil einer Vorrichtung, vorzugsweise eine Schaltung, bezeichnet, die die digitale Repräsentation einer Grafik aus einem Bildschirmspeicher (Framebuffer, Grafikspeicher) liest und die Grafik entsprechend der gespeicherten digitalen Informationen zur Anzeige auf einem Bildschirm (Monitor, Display) bringt. In PCs bzw. Laptops ist der Displaycontroller typischerweise ein Teil einer Grafikkarte. Erfindungsgemäß soll der Displaycontroller jedoch nicht auf eine Schaltung innerhalb einer Grafikkarte beschränkt sein. Beispielsweise kann ein Displaycontroller gemäß der vorliegenden Erfindung sich auch auf einer anderen Stelle befinden, insbesondere auf einem SOC (System-on-a-Chip). Unter System-on-a-Chip (SoC, dt. Ein-Chip-System), auch System-on-Chip oder System on a Chip, versteht man die Integration aller oder eines großen Teils der Funktionen eines Systems auf einem Chip (Die), also einem integriertem Schaltkreis (IC) auf einem Halbleiter-Substrat, auch monolithische Integration genannt. Während Systeme anfänglich aus einem Mikroprozessor- oder Mikrocontroller-IC und vielen anderen ICs für spezielle Funktionen bestanden, die auf einer Platine aufgelötet waren, lässt die heute mögliche Integrationsdichte zu, eine Vielzahl von Funktionen, ggf. sogar alle wichtigen Funktionen auf einem einzigen IC zu realisieren. Dabei werden digitale, analoge und Mixed-Signal-Funktionseinheiten integriert. Vorteile sind vor allem Kosteneinsparung, geringerer Energieverbrauch beziehungsweise Verlustleistung und umfassende Miniaturisierung. So ist heute beispielsweise bei Mobiltelefonen die digitale Funktion, gegebenenfalls mit Ausnahme des Speichers, auf einem IC realisiert. Auch die Schnittstellen beispielsweise zur Tastatur, zur SIM-Karte oder zum Display können bereits auf diesem IC enthalten sein.

Eine ähnliche Technik, um hohe Integrationsdichten auch von Bauelementen von stark unterschiedlicher Technik zu realisieren, ist das sogenannte System-in-Package (SiP). Dabei werden mehrere Chips in einem Gehäuse zusammengefasst.

Erfindungsgemäß ist ein Displaycontroller somit nicht auf eine bestimmte Hardware-Realisierung beschränkt, sondern vorzugsweise durch die Funktion des Displaycontrollers definiert.

Ein Framebuffer (engl. *frame -* Einzelbild, *buffer -* Puffer; Bildspeicher) ist ein Speicher oder eine Speicherregion, vorzugsweise ein Bildschirmspeicher innerhalb einer Grafikkarte, welche die digitale Repräsentation der darzustellenden Grafik enthält. Mit anderen Worten, zumindest ein Teil des Framebuffers entspricht einer digitalen Kopie des Bildschirms, d.h., jedem Bildschirmpixel kann ein bestimmter Bereich des Framebuffers zugewiesen werden, der dessen digital übersetzten Farbwert enthält. Im Sinne der vorliegenden Erfindung soll ein Framebuffer als *sichtbar* gelten, falls der Displaycontroller diese Region des Framebuffers ausliest, vorzugsweise regelmäßig ausliest und zur Anzeige auf dem Bildschirm bringt. Zudem kann ein Framebuffer zusätzlich zum sichtbaren Framebuffer einen zusätzlichen Speicherbereich aufweisen - im Folgenden Puffer genannt - wobei der Inhalt des Puffes üblicherweise nicht unmittelbar zur Darstellung des Inhalts auf dem Bildschirm ausgelesen wird.

Wiederum ist der Begriff des Framebuffers nicht auf eine bestimmte Hardware-Realisierung beschränkt. Bezugnehmend auf die oben angesprochenen SOCs kann der Framebuffer beispielsweise auch ein Hauptspeicher des SOCs sein. Erfindungsgemäß ist ein Framebuffer somit nicht auf eine bestimmte Hardware-Realisierung beschränkt, sondern vorzugsweise durch die Funktion des Framebuffers definiert.

Als Overlay wird die Fähigkeit bezeichnet, die es einem Displaycontroller erlaubt, mindestens eine weitere digitale Repräsentation einer Grafik - die beispielsweise in eine Puffer gespeichert ist - zusätzlich zur Anzeige zu bringen und damit die erste Anzeige, die auf dem sichtbaren Framebuffer basiert, beispielsweise deckend, transparent oder teilweise transparent zu überblenden. So kann die Overlayfunktion beispielsweise dazu verwendet werden, um zusätzlich zur Darstellung eines Bildes aus dem Framebuffer ein weiteres Bild direkt von einem Bus zu lesen und anzuzeigen (z.B. von einer Kamera). Die Overlayfunktion wird beispielsweise bei Kameras in Mobiltelefonen oder Digitalkameras verwendet, da dadurch die Latenz zwischen der Kamera und der Anzeige verringert werden kann.

Zudem ist eine Overlayfunktion eines Displaycontrollers bekannt, die der Dokumentation nach zum Einblenden der Fernsehprogrammnummer in TV-Geräten verwendet werden kann. Vorzugsweise verwendet das erfindungsgemäße Verfahren diese Overlayfunktion. Erfindungsgemäß wird diese Overlayfunktion jedoch kontrolliert dazu verwendet, um eine "nicht-Fälschbarkeit" zu kontrollieren und auf dem Bildschirm darzustellen. Diese Overlayfunktion wird von einem entsprechendem Computerprogramm bzw. einer Applikationen verwendet.

Als fälschungssicher bzw. nicht fälschbar gilt ein Indikator im Kontext dieser Erfindung dann, wenn ein Fälschungsversuch jederzeit durch den Benutzer enttarnt werden kann, z.B. weil ein Indikator ohne Interaktion durch den Benutzer angezeigt wird, oder sich die Indikatorhardware (z.B. ein Bereich der Anzeige) der Kontrolle durch die, potenziell fälschende, Anwendung entzieht.

Um einen fälschungssicheren Indikator anzuzeigen sind bereits Systeme bekannt, die aufgeteilt werden in ein sicheres Teilsystem und ein unsicheres Teilsystem. Die Aufteilung erfolgt beispielsweise durch Virtualisierung in sichere und unsichere Bereiche, wobei durch zusätzliche Hardware - etwa eine rote und eine grüne LED - angezeigt wird, welches Teilsystem aktiv ist, insbesondere welches Teilsystem für die Anzeige am Bildschirm verantwortlich ist. Das sichere Teilsystem wird hier manchmal als grün bezeichnet, wohingegen der unsichere Teilsystem als rot bezeichnet wird. Solche Systeme werden häufig als Rot-Grün-Systeme bezeichnet.

In dem Artikel: "Lockdown: Towards a Safe and Practical Architecture for Security Applications on Commodity Platforms" von A. Vasudevan et al., veröffentlicht in Trust and Trustworthy Computing, Lecture Notes in Computer Science Volume 7344, 2012, Seiten 34-54 wird ein Rot-Grün-System beschrieben bei dem eine Unterteilung jedoch nicht auf Vitalisierung basiert, sondern auf einer Partitionierung.

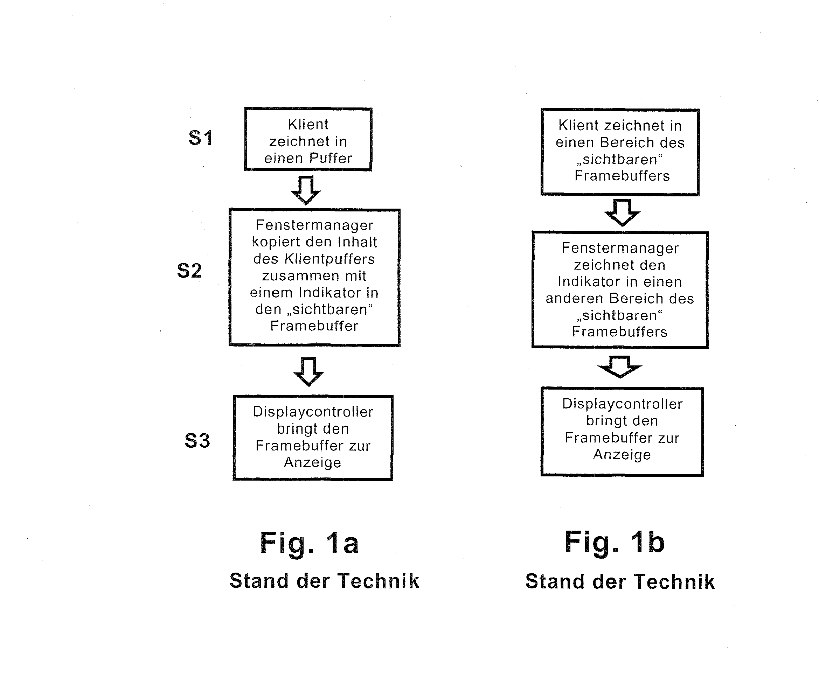

Neben den oben angesprochenen Hardwareindikatoren für Rot-Grün-Systeme gibt es bereits Lösungen, die die den Bildschirm selbst zur Anzeige eines Identitätsindikators verwenden. Figur 1a zeigt beispielhaft die wesentlichen Schritte einer bereits bekannten Lösung in einem Flussdiagramm. Insbesondere erhält eine vertrauenswürdige Softwarekomponente (im Folgenden *Framebufferverwalter* genannt) die Kontrolle über den Framebuffer. Dieser Framebufferverwalter erlaubt es zunächst allen Anwendungen, d.h. vertrauenswürdigen Anwendungen und nicht vertrauenswürdigen Anwendungen in einen Puffer zu schreiben (Schritt **S1**: Klient zeichnet in Puffer). Im Folgenden wird der Schreibvorgang in einen Speicherbereich des Framebuffers bzw. des Puffers auch als "zeichnen" bezeichnet. Der Puffer ist kein Teil des sichtbaren Framebuffers.

Zur Anzeige auf dem Bildschirm kopiert die vertrauenswürdige Softwarekomponente Framebufferverwalter den Inhalt dieses zusätzlichen Puffers in den sichtbaren Framebuffer (Schritt **S2**). Zusätzlich ergänzt der Framebufferverwalter einen Indikator an stets derselben Stelle im Framebuffer. Zusätzlich zu dem darzustellenden Inhalt wird auch noch ein Indikator in den "sichtbaren Framebuffer" kopiert.

Der Displaycontroller ließt den *sichtbaren* Framebuffer aus und stellt den Inhalt auf dem Monitor dar (Schritt **S3**). Da der Indikator stets an derselben Stelle im Framebuffer geschrieben wird, wird der Indikator an stets derselben Stelle auf dem Bildschirm dargestellt. Dieser Indikator ist ein Identitätsindikator, der dem Benutzer zeigt welche Applikation (Anwendung) für den Inhalt der Anzeige verantwortlich ist. Dieses Vorgehen mit einem Kopiervorgang vom Puffer in den sichtbaren Framebuffer führt jedoch zu einem erhöhten Rechenaufwand und damit zu einem erhöhten Energieverbrauch und ist deshalb insbesondere bei eingebetteten Systemen unerwünscht.

Um derartige Kopiervorgänge zu vermeiden, gibt es auch Ansätze, bei denen der Framebuffer mittels einer Speicherverwaltungseinheits-Isolation (MMU-Isolation; Memory Management Unit) auf Seitengranularität geteilt wird und so teilweise den nicht vertrauenswürdigen Anwendungen zur Verfügung gestellt wird (siehe Fig. 1b). Insbesondere übersetzten MMUs Speicheradressen von virtuellen Adressen in physische Adressen. Dafür benutzen MMUs Datenbanken, die sogenannten page tables (Seitentabellen). Würden man für jede mögliche Adresse einen Eintrag in diese Tabellen machen wäre eine Tabelle größer als der Speicher den sie verwaltet. Entsprechend wird der Speicher in Kacheln mit fester Größe aufgeteilt (4096 Byte ist eine sehr übliche Größe). Es werden jetzt lediglich die Startadressen dieser Kacheln in die Tabellen eingetragen. Damit sich leichter feststellen lässt welcher Tabelleneintrag für eine bestimmte virtuelle Adresse gültig ist sind als Startadressen nur Vielfache von der Kachelgröße erlaubt (alignment). Vereinfacht: <virtualle Adresse>/<Kachelgröße> = <Index in der Seitentabelle>. Der Rest ist dann der Index innerhalb der Kachel.

Als "Seite" bezeichnet man den virtuellen Bereich der auf eine physische "Kachel" abgebildet wird. Das Aufteilen von Speicherbereichen (Addressraumisolation) mittels MMU ist also nur mit einer Granularität möglich, die der Kachel-/Seitengröße entspricht.

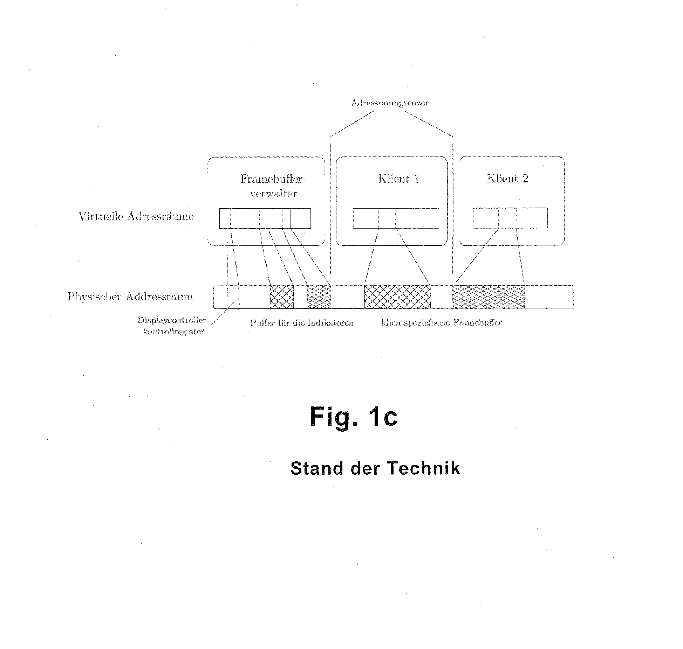

Dieses Vorgehen beschränkt die Position des Indikators und stellt zusätzliche Anforderungen an das Alignment des Framebufferspeichers und damit zu Einschränkungen bei der Verwendung von Optimierungstechniken wie dem doublebuffering. Insbesondere ist unter Alignment das Ausrichten von Speicheradressen zu verstehen, an gewissen typischen Werten, oftmals einem Vielfachen einer Potenz von zwei, hier insbesondere einem Vielfachen der Seitengröße. Dieses Verfahren ist beispielsweise als Implementierung im Rahmen von L4Re bekannt (www.os.info.tudresden.de/L4Re). Figur 1c zeigt ein Beispiel einer Aufteilung des physikalischen Adressraums nach dem Stand der Technik. Hier wird eine Möglichkeit I beschrieben, wie ein nichtfälschbarer Indikator implementiert werden kann; in diesem Fall effizient aber unflexibel. Figur 1 soll nur prinzipiell Adressraumisolation veranschaulichen: Drei Prozesse die unterschiedliche "virtuelle Sichtweisen" auf den Speicher haben. Figur 1 gehört nicht direkt in diesen Kontext. Um zu veranschaulichen wie die Isolation in dem Kontext von Möglichkeit I verwendet wird, müssten Bereiche mit gleicher Schraffur angrenzend gezeichnet werden. Diese spezielle Speicherverwaltung ist jedoch aufwändig und beschränkt in ihren Möglichkeiten.

Es besteht somit der Bedarf für ein alternatives bzw. verbessertes Verfahren zur Anzeige eines fälschungssicheren Identitätsindikators.

### ZUSAMMENFASSUNG DER ERFINDUNG

Die vorliegende Erfindung stellt ein neues, flexibles und effizientes Verfahren zur Anzeige eines fälschungssicheren Identitätsindikators gemäß dem unabhängigen Verfahrensanspruch 1 bereit. Die abhängigen Ansprüche bzw. die weiter unten diskutierte Aspekte beschreiben weitere, vorzugsweise bevorzugte Ausführungsformen bzw. Abwandlungen der Erfindung.

Insbesondere betrifft die vorliegende Erfindung ein Verfahren zur Anzeige eines fälschungssicheren Identitätsindikators auf einem Bildschirm mit Hilfe eines Displaycontrollers, der den Inhalt eines Speichers einer Grafikschaltung auf dem Bildschirm darstellt. Das erfindungsgemäße Verfahren umfasst vorzugsweise mindestens einen der folgenden Schritte. Zunächst wird eine auf dem Bildschirm darzustellenden Grafik durch eine Klientanwendung in einen Klient spezifischen Bereich des Speichers der Grafikschaltung geschrieben (es wird gezeichnet). Ein zur Klientanwendung gehörender Identitätsindikator wird in einen Speicherbereich außerhalb des Klient spezifischen Bereichs geschrieben (es wird gezeichnet). Der Inhalt des Klient spezifischen Bereichs des Speichers der Grafikschaltung wird unter Verwendung des Displaycontrollers auf dem Bildschirm angezeigt. Gleichzeitig wird der Identitätsindikator, der im Speicherbereich außerhalb des Klient spezifischen Bereichs gespeichert ist, auf dem Bildschirm angezeigt unter Verwendung einer Overlayfunktionalität des Displaycontrollers. Vorzugsweise ist der Displaycontrollers als Hardware implementiert.

Das erfindungsgemäße Verfahren ist vorzugsweise für jegliche Art von Bildschirmen geeignet bei denen ein Displaycontroller eine Overlayfunktion/Overlayfunktionalität bereitstellt, beispielsweise das Display eines Smartphones, eines Laptops, PCs oder eines Smart TVs.

Vorzugsweise kontrolliert ein Framebufferverwalter das Zeichnen (speichern) der Grafik in den Klient spezifischen Bereich und/oder das Zeichnen des Identitätsindikators in den Speicherbereich außerhalb des Klient spezifischen Bereichs. Um einen sicheren Identitätsindikator darzustellen ist der Frambufferverwalter verzugsweise vertrauenswürdig und weiter bevorzugt zertifiziert. Zudem ist es bevorzugt, wenn der Framebufferverwalter als Software implementiert ist.

Gemäß einer weiteren bevorzugten Ausführungsform kann der Speicher mindestens einen, vorzugsweise zwei, weiter bevorzugt vorzugsweise mehrere sichtbare Framebuffer aufweisen, wobei vorzugsweise der Inhalt jedes Framebuffers durch den Displaycontroller auf dem Bildschirm dargestellt werden kann.

Gemäß einer weiter bevorzugten Ausführungsform kann das Zeichnen eines zur Klientanwendung gehörenden Identitätsindikators von einem Zustandsanzeiger kontrolliert werden, der vorzugsweise mit dem Framebufferverwalter kommuniziert oder ein Teil davon ist.

Durch die Verwendung der Overlayfunktionalität kann ein gleichzeitiges Anzeigen der Anzeige des Identitätsindikators und der Grafik auf dem Bildschirm erreicht werden, wobei der Identitätsindikator vorzugsweise die Klientanwendung überblendet.

Beispielsweise kann der Klient spezifische Bereich ein erster Overlaybuffer sein und der Speicherbereich außerhalb des Klient spezifischen Bereichs ein zweiter Overlaybuffer sein.

Das erfindungsgemäße Verfahren ist vorzugsweise auch als Computersystem mit einer Ausführungsumgebung implementiert, die zur Durchführung eines Verfahrens geeignet bzw. angepasst ist.

Schließlich kann die Erfindung auch als Computerprogrammprodukt realisiert werden, das direkt in den internen Speicher eines digitalen Computers geladen werden kann und Softwarecodeabschnitte umfasst, mit denen die entsprechenden Schritte gemäß des erfindungsgemäßen Verfahrens ausgeführt werden, wenn das Produkt auf einem Computer läuft.

Bei der vorliegenden Erfindung wird vorzugsweise die Overlayfunktionalität eines Displaycontrollers verwendet, um einen sicheren und für den Benutzer sichtbaren Identitätsindikator auf einem Bildschirm anzuzeigen.

Vorzugsweise benötigt der Framebufferverwalter weder Wissen über die Art und Weise wie der Klient (d.h. die Anwendung den Inhalt des Framebuffers generiert, noch muss er in diesen Vorgang eingreifen. Diese Eigenschaften werden vorzugsweise erreicht, indem der Framebufferverwalter den Displaycontroller so konfiguriert, dass dieser direkt einen klientspeziefischen Framebuffer zur Anzeige bringt. Der Identitätsindikator wird vorzugsweise in einen Speicherbereich geschrieben, der anders als bei den oben genannten Lösungen (siehe Fig. 1a und 1b) disjunkt sein kann und wird mittels Overlayfunktionalität mit der klientkontrollierten Grafik kombiniert. Hierdurch entfallen vorzugsweise zusätzliche Kopiervorgänge ebenso wie zusätzliche Alignementbetrachtungen, wie sie im Stand der Technik notwendig sind (siehe Figuren 1a, 1b und 1c). Ein Unterschied der vorliegenden Erfindung zu bestehenden Verfahren besteht beispielsweise darin, dass der Speicherbereich bei der oben diskutierten Möglichkeit I nicht disjunkt sein darf (jedenfalls nicht im physischen Adressraum). Bei Verwendung einer System-MMU (wie sie ARM jetzt eingeführt hat) fällt diese Einschränkung auch für I weg, die Alignment Einschränkung bleibt allerdings bestehen.

Das erfindungsgemäße Verfahren kann allgemein in Verbindung mit jedem Monitor verwendet werden, beispielsweise im Bereich von Smartphones, Laptops, PCs und Smart TVs, etc. angewendet werden.

### KURZE BESCHREIBUNG DER ZEICHNUNGEN

Im Folgenden werden bevorzugte Ausführungsformen der vorliegenden Erfindung unter Bezugnahme auf die Figuren ausführlich beschrieben. Es zeigen:
- Fig. 1a: ein Flussdiagramm eines Verfahrens gemäß dem Stand der Technik bei dem ein Framebufferverwalter den Inhalt eines Puffers in den sichtbaren Framebuffer kopiert, um einen Indikator auf dem Bildschirm darzustellen;
- Fig. 1b: ein Flussdiagramm eines Verfahrens gemäß dem Stand der Technik bei dem sichtbare Framebuffer durch Speicheradressen-Alignment organisiert werden, um einen Indikator auf dem Bildschirm darzustellen;
- Fig. 1c: eine schematische Darstellung der Organisation des Framebuffers bei einem Verfahren wie in Fig. 1b dargestellt;
- Fig. 2: ein Flussdiagramm eines erfindungsgemäßen Verfahren bei dem ein Framebufferverwalter den Displaycontroller so konfiguriert, dass dieser direkt einen klientspeziefischen Framebuffer zur Anzeige bringt;
- Fig. 3: das schematische Zusammenspiel von Software, Hardware und Anzeige (Bildschirm) gemäß der vorliegenden Erfindung; und
- Fig. 4: eine schematische Darstellung eines Speichers, der die Grafiken klientspezifischer Anwendungen sowie dazugehörige Identitätsindikatoren enthält.

### DETAILLIERTE BESCHREIBUNG BEVORZUGTER AUSFÜHRUNGSFORMEN

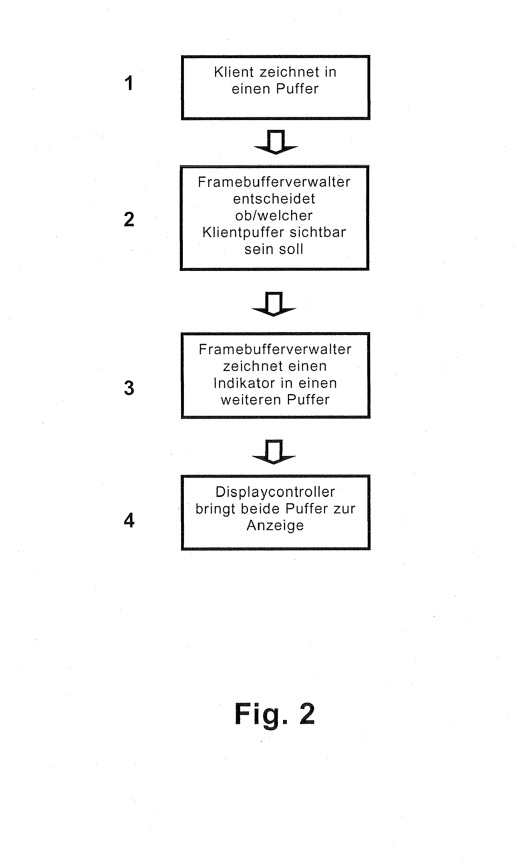

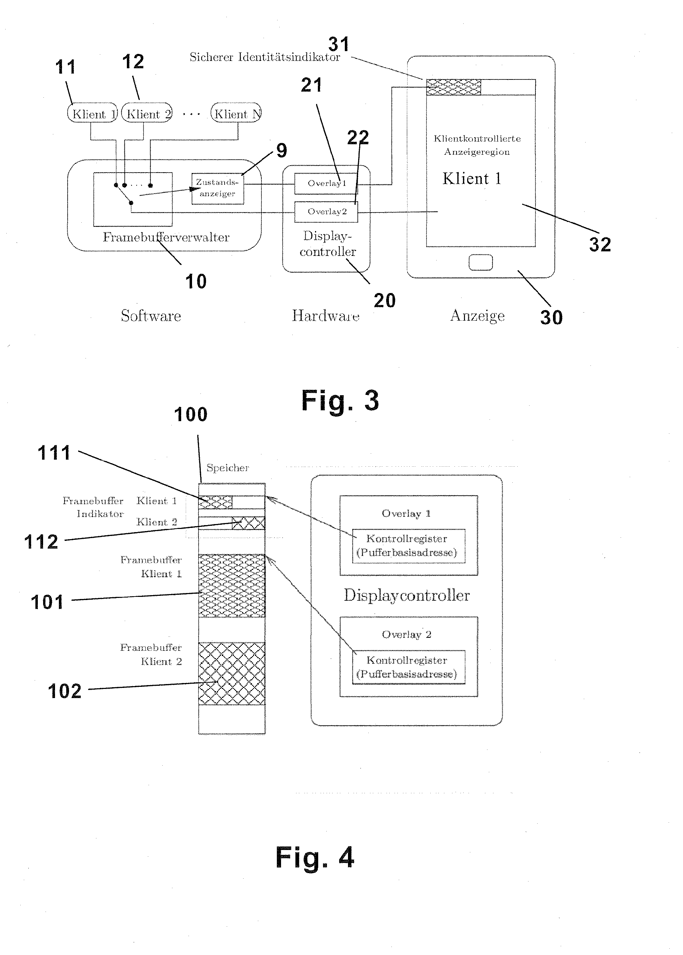

Figur 2 zeigt ein Flussdiagramm eines erfindungsgemäßen Verfahrens. In einem ersten **Schritt 1** schreibt bzw. zeichnet eine Anwendung (Klient) Informationen die auf dem Bildschirm dargestellt werden sollen in einen dazu geeigneten Speicher (Puffer; Framebuffer). Vorzugsweise handelt es sich bei diesem Speicher um den Speicher einer Grafikschaltung. Zudem kann es möglich sein, dass nicht nur ein erster Klient (Klient 1), sondern auch ein zweiter Klient (Klient 2) Informationen die auf dem Bildschirm dargestellt werden sollen, in den Speicher (Puffer) schreibt (siehe Fig. 3). Die Erfindung ist jedoch nicht auf zwei Anwendungen beschränkt, sodass vorzugsweise N, mit N∈ N, Anwendungen in den Speicher schreiben/zeichnen können. Die Bereiche die von den entsprechenden Anwendungen/Klients beschrieben werden, werden im Folgenden auch Klientbuffer bezeichnet. Fig. 4 zeigt beispielsweise zwei verschiedene Klientbuffer 101 und 102 im Speicher 100, die an verschiedenen Stellen innerhalb des Speichers 100 gespeichert sind (Framebuffer Klient 1, Framebuffer Klient 2).

In einem zweiten **Schritt 2** entscheidet ein Framebufferverwalter 10, ob bzw. welcher Klientbuffer des Framebuffers sichtbar sein soll, d.h. auf dem Bildschirm dargestellt werden soll. Beispielsweise kann der Framebufferverwalter 10 als Software implementierte sein, um zu kontrollieren welcher Klient die Anzeige kontrolliert (Routing). Dieses Kontrollieren ist in der Fig. 3 schematisch als Schalter dargestellt, d.h. der Framebufferverwalter 10 kontrolliert, welcher der verschiedenen Klienten aus der Liste: Klient 1, Klient 2, ..., Klient N auf dem Bildschirm angezeigt werden soll. Hierbei sollte jedoch beachtet werden, dass der dargestellte Schalter rein schematisch zu deuten ist, d.h. es kann zwischen verschiedenen Klients umgeschaltet werden. Gemäß dem in Fig. 3 dargestellten Beispiel bestimmt der Framebufferverwalter 10, dass der Klient 1 die Anzeige kontrolliert, d.h. die gesamte Anzeige 32 auf dem Bildschirm 30 wird vom Klient 1 bestimmt. Dazu wird das anzuzeigende Bild in der Hardware (z.B. Grafikkarte) in einen bestimmten Speicherbereich geschrieben; hier der Bereich "Overlay 2". Der Inhalt des Overlay 2 wird anschließend vom Displaycontroller 20 an den Bildschirm 30 geschickt, sodass ein Teil der Bildschirmdarstellung 32 den Inhalt darstellt, wie vom Klient 1 bestimmt. Mit anderen Worten, ein Teil der Bildschirmanzeige ist das Abbild der digitalen Repräsentation aus Overlay 2.

Zudem gibt der Framebufferverwalter 10 die Information, welcher Klient die Bildschirmanzeige bestimmt an einen Zustandsanzeiger (siehe Fig. 3) weiter. Vorzugsweise ist der Zustandsanzeiger 9 ebenfalls als Software implementiert. Mit Hilfe des Zustandsanzeigers kann kontrolliert bzw. dargestellt werden, welcher Klient für die Darstellung auf dem Bildschirm 30 verantwortlich ist. Insbesondere basiert der erfindungsgemäße sichere (Identitäts-)Indikator 31 auf dem Zustandsanzeiger 9. Mit anderen Worten, bei den in Fig. 3 links dargestellten Komponenten handelt es sich um eine erfindungsgemäße Softwarekomponente, welche unter anderem den sicheren Indikator 31 kontrolliert und den sicheren Framebuffer zwischen verschiedenen Klienten umschaltet.

Der Inhalt des Zustandsanzeigers 9 wird dann vorzugsweise an die Hardware der Grafikschaltung übermittelt. Der Zustandsanzeiger 9 zeichnet/schreibt einen Identitätsindikator ebenfalls in einen Buffer im Framebuffer/Speicher 100, jedoch vorzugsweise in einen anderen Framebufferbereich der Hardware, hier in den "Overlay 1". Der Displaycontroller 20 kann nun - aufgrund der Overlayfunktionalität von Displaycontrollern - sowohl den Overlay 2 Bereich als auch den Overlay 1 Bereich gleichzeitig auf dem Bildschirm anzeigen, wobei der Overlay 1 Bereich mit dem Identitätsindikator hier den Overlay 2 Bereich überschreibt, sodass der sichere Identitätsindikator 31 stets auf dem Bildschirm dargestellt wird.

Der Displaycontroller 20 ist in der Hardware implementiert, wobei der Displaycontroller 20 mindestens zwei verschiedene Buffer - hier Overlay 1 und Overlay 2 - zur Anzeige bringen kann. Entsprechend ist der Bildschirm bzw. die Anzeige in eine klientkontrollierte Anzeige und eine Anzeige des Identitätsindikators aufgeteilt (siehe Anzeige rechts in Fig. 3). Erfindungsgemäß wird diese Fähigkeit bekannter Displaycontroller mit Overlayfunktionalität geschickt genutzt, um die klientgenerierten Inhalte mit dem Identitätsindikator zu kombinieren.

Figur 4 zeigt, dass sowohl das Routing als auch der Inhalt der Indikatorpuffer dadurch vor Manipulation geschützt sind, dass der Framebufferverwalter die alleinige Kontrolle darüber hat. Der Schutz der Indikatorpuffer wird durch einen Hardwaremechanismus der CPU, der unter Betriebssystem Kontrolle steht, gewährleistet. Insbesondere zeigt die Figur 4 beispielhaft wie der Displaycontroller erfindungsgemäß angesteuert werden kann. So kann eine Ansteuerung erfolgen, indem die Kontrollregister auf die Basisadressen des Indikator-Puffers bzw Framebuffers von Klient 1 gesetzt werden. Wird der Inhalt des Framebuffers von Klient 1 sichtbar und der Indikator signalisiert dieses. Insbesondere sind Indikatoren hier die ganzen Zeilen und nicht nur die schraffierten Bereiche von 111 und 112.

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

## Patentansprüche

1. Verfahren zur Anzeige eines fälschungssicheren Identitätsindikators auf einem Bildschirm (30) mit Hilfe eines Displaycontrollers (20), der den Inhalt eines Speichers (100) einer Grafikschaltung auf dem Bildschirm (30) darstellt mit den Schritten:
Zeichnen einer auf dem Bildschirm (30) darzustellenden Grafik (32) durch eine Klientanwendung (11, 12, ...,1N) in einen Klient spezifischen Bereich (22) des Speichers (100) der Grafkschaltung;
Zeichnen eines zur Klientanwendung (11, 12, ...,1N) gehörenden Identitätsindikators (31) in einen Speicherbereich (21) außerhalb des Klient spezifischen Bereichs (22);
Anzeigen des Klient spezifischen Bereichs (22) des Speichers der Grafikschaltung unter Verwendung des Displaycontrollers (20) auf dem Bildschirm (32, 30) und
gleichzeitiges Anzeigen des Identitätsindikators (31) aus dem Speicherbereich (21) außerhalb des Klient spezifischen Bereichs (22) auf dem Bildschirm (31, 30), unter Verwendung einer Overlayfunktionalität des Displaycontrollers (20).

2. Verfahren nach Anspruch 1, wobei der Bildschirm (30) das Display eines Smartphone, Laptops, PCs oder Smart TVs ist.

3. Verfahren nach Anspruch 1 oder 2, wobei das Zeichnen der Grafik in den Klient spezifischen Bereich (22) und/oder das Zeichnen des Identitätsindikators in den Speicherbereich außerhalb des Klient spezifischen Bereichs (22) von einem Framebufferverwalter (10) kontrolliert wird, der verzugsweise vertrauenswürdig ist und weiter bevorzugt zertifiziert ist.

4. Verfahren nach Anspruch 3, wobei der Framebufferverwalter (10) als Software implementiert ist.

5. Verfahren nach einem der vorhergehenden Ansprüche, wobei der Speicher (100) mindestens zwei, vorzugsweise mehrere (sichtbare) Framebuffer (101, 111, 102, 112) aufweist, wobei vorzugsweise der Inhalt jedes Framebuffers durch den Displaycontroller (20) auf dem Bildschirm dargestellt werden kann.

6. Verfahren nach einem der vorhergehenden Ansprüche, wobei das Zeichnen eines zur Klientanwendung (11, 12, ...,1N) gehörenden Identitätsindikators (31) von einem Zustandsanzeiger kontrolliert wird.

7. Verfahren nach einem der vorhergehenden Ansprüche, wobei der Displaycontrollers (20) als Hardware implementiert ist.

8. Verfahren nach einem der vorhergehenden Ansprüche, wobei beim gleichzeitigen Anzeigen die Anzeige des Identitätsindikators (31) die Grafik (32) der Klientanwendung überblendet.

9. Verfahren nach einem der Vorhergehenden Ansprüche, wobei Klient spezifischen Bereich (22) ein erster Overlaybuffer ist und der Speicherbereich (21) außerhalb des Klient spezifischen Bereichs (22) ein zweiter Overlaybuffer ist.

10. Computersystem mit einer Ausführungsumgebung, zur Durchführung eines Verfahrens nach einem der Ansprüche 1 bis 9.

11. Computerprogrammprodukt, das direkt in den internen Speicher eines digitalen Computers geladen werden kann und Softwarecodeabschnitte umfasst, mit denen die entsprechenden Schritte gemäß der Verfahrensansprüche 1 bis 9 ausgeführt werden, wenn das Produkt auf einem Computer läuft.
